# EUROPEAN PATENT SPECIFICATION

(11) **EP 3 704 934 B1**
(45) Date of publication and mention of the grant of the patent: **02.11.2022**
(21) Application number: 20000097.4
(22) Date of filing: 06.03.2020
(51) Int. Cl.: A01G 31/02, A01G 31/06

(54) **APPARATUS FOR THE AUTOMATION OF HYDROPONIC CULTIVATION AND/OR DRYING OF PLANTS**
VORRICHTUNG FÜR DIE AUTOMATISIERUNG DER HYDROPONISCHEN KULTIVIERUNG UND/ODER TROCKNUNG VON PFLANZEN
APPAREIL POUR L'AUTOMATISATION DE LA CULTURE HYDROPONIQUE ET/OU DU SÉCHAGE DES PLANTES

(30) Priority: 06.03.2019 IT 201900003289
(43) Date of publication of application: 09.09.2020
(73) Proprietor: Marchetti, Davide, 85050 Sant'Angelo Le Fratte (PZ) (IT)
(72) Inventor: Marchetti, Davide, 85050 Sant'Angelo Le Fratte (PZ) (IT)
(74) Representative: Maiello, Helenio Francesco

(56) References cited:
- KR-B1- 101 314 521
- US-A1- 2017 347 547
- US-B2- 9 730 398

## Description

### Technical Field

The present invention finds application in the technical field of systems for the treatment and cultivation of plants and has as its object an apparatus adapted to allow the automation of hydroponic cultivation and/or plant drying treatments.

### State of the art

Hydroponic cultivation is a particular agronomic technique that involves the cultivation of plants and vegetal elements in general in the absence of the classic earthy substrate, replaced by an aqueous manuring solution, suitably fertilized, and possibly by substrates in expanded or fibrous materials with the sole purpose of root holding. This cultivation technique has the advantage of allowing a very precise regulation of nutrients, as well as the control of the various physical parameters important for a correct growth of plants, such as oxygen content of the air, CO2 levels, humidity.

To this end, various apparatuses are known which allow to control the different operating parameters, both of the aqueous solution and of the air, to optimize cultivation.

For example, US2018192600 discloses a hydroponic environmental control device that automates the management of air, temperature, CO2, lighting and humidity for the optimal growth of plants in a hydroponic environment based on user-specified parameters, with complete recording and reporting.

The device consists of a digital circuit that reads the sensor information and activates/deactivates the fans, opens/closes the CO2 valves, starts/stops dehumidification and turns the lights on and off.

The device consists of two modules, each of which is designed for a different environmental setting, with a control module, with which the user interfaces, normally located in the hydroponic environment or close to it, and a power supply module, normally located in a dry area, which supplies power to the control module.

The drawback of these known solutions is represented by the fact that the various devices for the treatment of water and air are placed directly inside the cultivation environment, possibly keeping outside only the control devices and power supply. As a first consequence, these solutions require a specific design of the cultivation environment, as they cannot be used with pre-existing environments.

Secondly, the insertion of electrical devices, such as circulation pumps, electric heaters, tanks for fertilizers and various adjuvants, within a humid environment requires particular construction measures to preserve their operation.

Last but not least, maintenance work is also longer and more complex, leading to an overall increase in costs.

US2017347547 discloses an apparatus for hydroponic cultivation provided with almost of the feature of the preamble of the present claim 1 but wherein the air conditioning means do not allow selective heating or cooling of the air.

US9730398 and KR101314521 discloses further embodiments of unit for plant cultivation having complex structure and wherein the units for conditioning air and treating water are placed inside the same casing housing the cultivation chamber.

### Scope of the invention

The object of the present invention is to provide an apparatus for the automation of hydroponic cultivation and the drying of plants that is simple and compact to be particularly efficient and at the same time relatively inexpensive.

A particular object is to provide an apparatus for the automation of hydroponic cultivation and the drying of plants that contains all the needing devices for the conditioning of air and for irrigation water and which is particularly compact.

Still another object of the present invention is to provide an apparatus for the automation of hydroponic cultivation and the drying of plants which allows to intervene on the various cultivation parameters, both of the irrigation water and of the air, in a rapid and precise manner.

Still another object of the present invention is to provide an apparatus for the automation of hydroponic cultivation and the drying of plants that can also be applied to pre-existing cultivation environments.

These objects, as well as others that will become more clear hereinafter, are achieved by an apparatus for the automation of hydroponic cultivation and the drying of plants which, according to claim 1, comprises an upper air conditioning unit having a conduit for the withdrawal of the air to be conditioned and for the delivery of the conditioned air, said conduit being associated with means for the recirculation of air and being adapted to be placed in fluid communication with the external cultivation and/or drying environment to define, in use, a closed cycle, and a lower water treatment unit provided with water pumping means having a water collection tank to be treated with an inlet pipe for water coming from the external cultivation environment and a delivery pipe for the treated water to the external cultivation and/or drying environment.

The upper conditioning unit comprises air conditioning means for dehumidifying and cooling it and air heating means suitable for being operated in a combined and/or selective manner to vary the temperature and/or humidity parameters of the air to be sent to the external environment.

The lower water treatment unit comprises conditioning means for the water collected in said tank, dosing means for manuring and/or fertilizing and/or nutrients substances in said tank, means for regulating the chemical and/or physical parameters of the water collected in said tank.

Thanks to this combination of features, the apparatus will have a particularly compact structure and will allow to perform all the necessary adjustments for air and water inside the cultivation and/or drying environment, while remaining outside this environment and therefore not inserted in an environment whose temperature and humidity properties, as well as the presence of liquids, could damage the electrical components.

Advantageous embodiments of the invention are obtained in accordance with the dependent claims.

### Brief disclosure of the drawings

Further features and advantages of the invention will become more apparent in the light of the detailed description of some preferred but not exclusive embodiments of an apparatus for the automation of hydroponic cultivations and the drying of plants, shown by way of non-limiting example with the aid of the attached drawings wherein:
**FIG. 1** is a perspective view of an apparatus according to a first preferred embodiment associated with a hydroponic cultivation environment;
**FIG. 2** is an exemplificative working scheme of the apparatus;
**FIG. 3** is a perspective view of an apparatus according to a second preferred embodiment;
**FIG. 4** is a first perspective and sectioned view of the apparatus of Fig. 3;
**FIG. 5** is a second perspective and sectioned view of the apparatus of Fig. 3;
**FIG. 6** is a third perspective and sectioned view of the apparatus of Fig. 3 without some inner elements and wherein the air flow inside the upper unit is highlighted;
**FIG. 7** is a fourth perspective and sectioned view of the apparatus of Fig. 3 without some inner elements and wherein the air flow inside the lower unit is highlighted;
**FIG. 8** is a top sectioned view of the apparatus of Fig. 3.

### Best mode of carrying out the invention

The attached figures show two preferred but not exclusive embodiments of an apparatus for the automation of hydroponic cultivation and the drying of plants according to the invention.

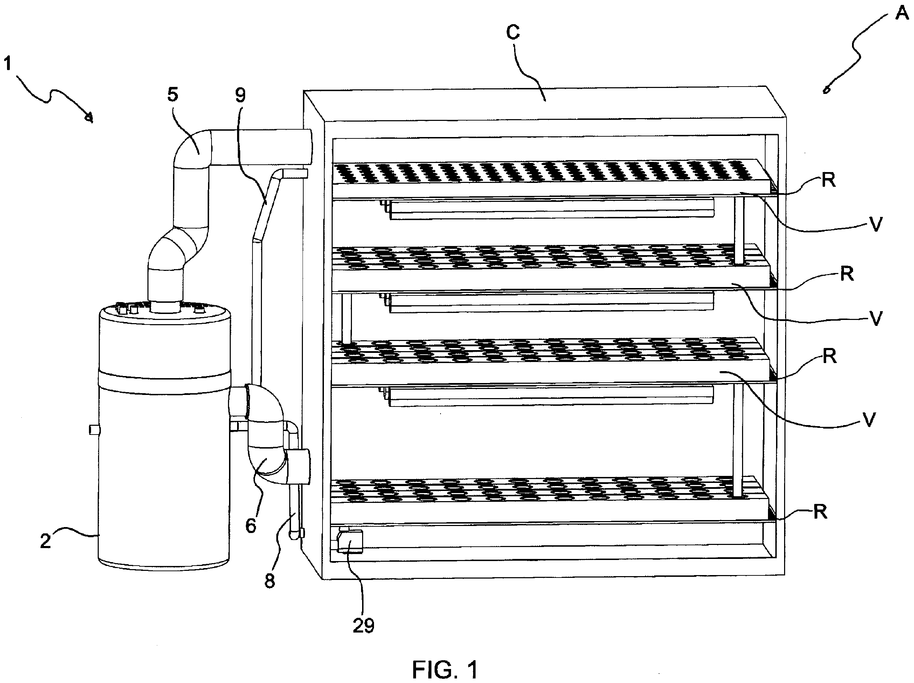

As visible in **Fig. 1****,** the apparatus, globally indicated with **1,** will be adapted to be connected to an external environment **A** for hydroponic cultivation and/or the drying of plants and vegetal elements in general, without particular limitations.

The environment **A,** not belonging to the apparatus of the present invention, may be designed according to different modalities and in general may comprise a treatment chamber **C** with one or more shelves **R** for the positioning of the plants and respective tanks **V** for the collection of the cultivation water.

In a first version, the cultivation environment **A** may be closed for a complete control of all the conditioning operations of the cultivation environment.

Alternatively, the environment **A** may be opened for the automation only of the irrigation steps, dosage of fertilizers and control of the parameters of the irrigation water.

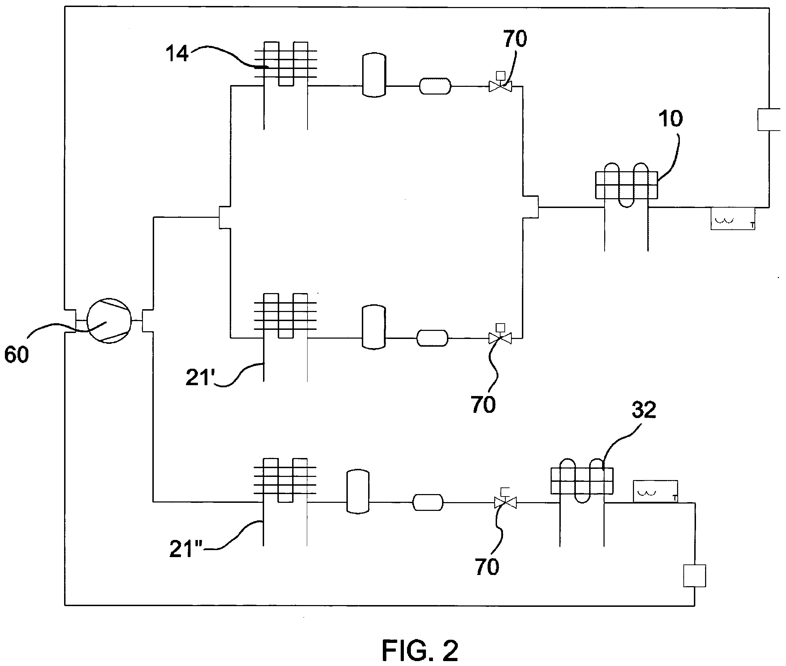

In its more general configuration, also schematized in **Fig. 2****,** the apparatus **1** will comprise a containment carter **2** which contains at its inside an upper air conditioning unit **3** and a lower water treatment unit **4.**

The upper air conditioning unit **3** has a withdrawal conduit **5** for the air to be conditioned and a delivery conduit **6** for the conditioned air.

The two conduits **5, 6** are both placed in fluid communication with the cultivation and/or drying external environment **A,** through suitable openings provided or specifically made in the same environment, to define, in use, a closed cycle for the treatment air.

The exchange of air between the apparatus **1** and the cultivation environment **A** will be promoted by air recirculation means, described in more detail below, placed inside the upper conditioning unit **3.**

In turn, the lower water treatment unit **4** is provided with water pumping means, also described in more detail below, having a collection tank **7** for the water to be treated. The tank **7** will also be placed in communication with the treatment chamber **C** of the cultivation environment **A** by means of an inlet pipe **8** of the water coming from the external cultivation and/or drying environment **A** and a delivery pipe **9** of the treated water to the cultivation and/or drying external environment **A.**

The in and out flow of the water from the lower treatment unit **4** will be promoted by the pumping means which will be partly inside the containment carter **2** and partly outside and placed inside the cultivation environment **A,** as described further on detail here below.

The upper conditioning unit **3** comprises air conditioning means adapted to dehumidify and cool the air in the cultivation chamber **C** and air heating means adapted to be operated in a combined and/or selective manner to vary the parameters of temperature and/or humidity of the air to be sent to the external environment **A** and in particular to dehumidify, heat or cool it.

The lower water treatment unit **4** comprises conditioning means for the water collected in the tank, means for dosing manuring and/or fertilizers and/or nutrients inside the water collected in the tank, means for adjusting the chemical and/or physical parameters of the water collected in the tank, such as pH, electrical conductivity EC, CO2 content inside the cultivation chamber **C.**

According to a preferred but not exclusive embodiment, the upper unit **3** and the lower unit **4** may share one or more elements of the respective means for the treatment of air and water, and for example they will be adapted to operate thanks to the same compressor of cooling gas **60** arranged in the upper unit **3.**

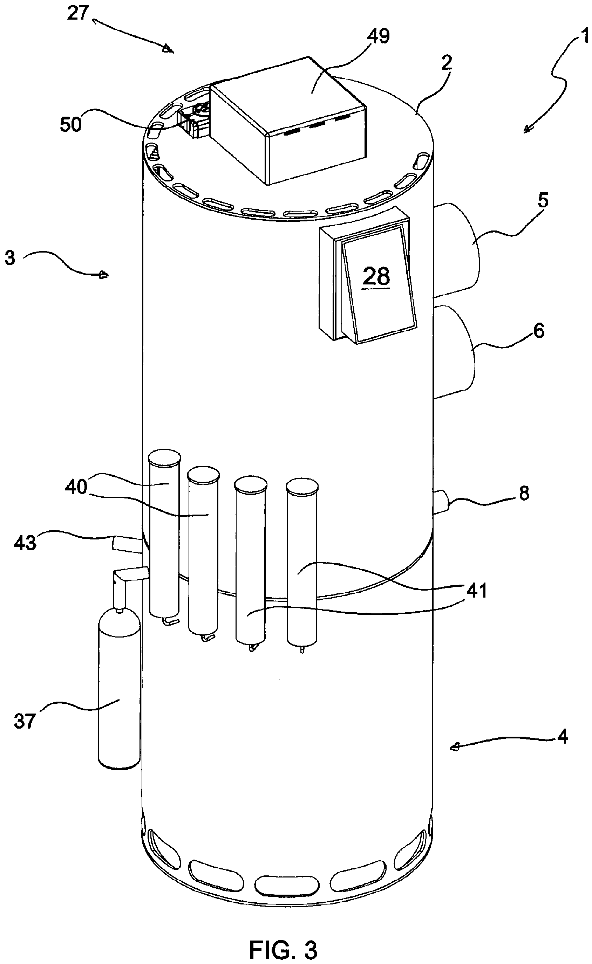

**Fig. 3** shows a second embodiment of the apparatus **1** according to the invention, which differs from the previous one in the position of the joint sections of the withdrawal conduit **5** and delivery conduit **6** of the air.

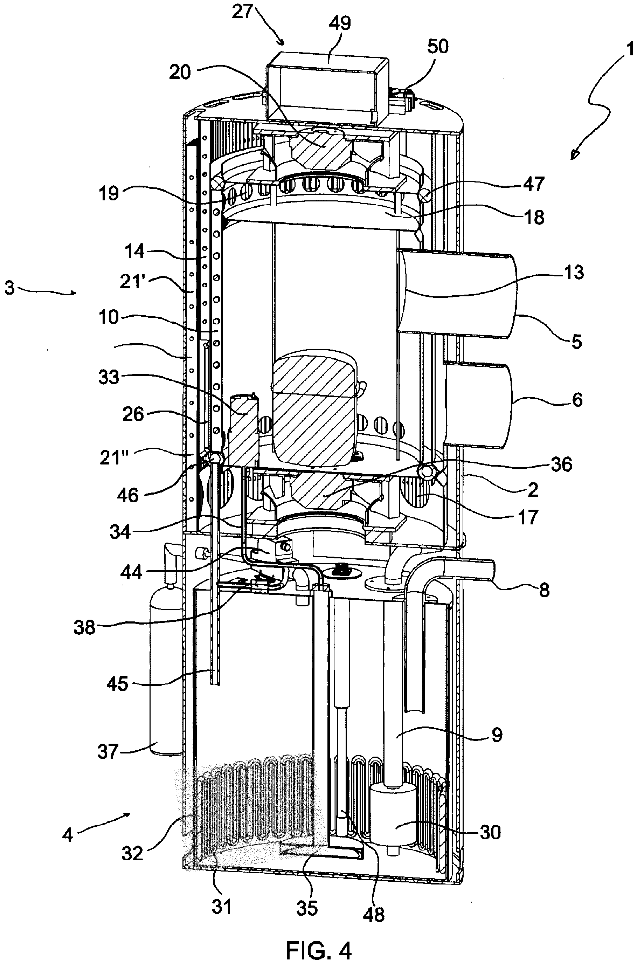

As even more clearly visible from **Fig. 4****,** the air conditioning means comprise a first evaporator **10** designed for the treatment of the air coming from the cultivation environment **A** and having a first cylindrical jacket **11** closed at the ends to define a first collecting chamber **12** of the air to be conditioned, provided with an opening **13** for the connection of the withdrawal conduit **5.**

Furthermore, these means also comprise a first condenser **14** whose task will be to heat the air directed towards the cultivation environment **A.**

The first condenser **14** has a second cylindrical jacket **15** coaxial and external to the first cylindrical jacket **11** to define an inner interspace **16** in which the first evaporator **10** is housed.

The passage of the air flow from the first collection chamber **12** to the first interspace **16** will be made possible by the presence of a plurality of first peripheral passages **17** made on the lower part of the first jacket **11.**

The first cylindrical jacket **11** also encloses a second air collection chamber **18** located above the first collection chamber **12** and in fluidic connection therewith through the inner interspace **16** and a plurality of second peripheral passages **19.**

The air flow will instead be promoted by the recirculation means by means of a first aspirator **20** housed above the second collection chamber **18.**

This peculiar position of the first aspirator **20** will allow for high soundproofing and also a slight decompression of the air inside the interspace **16,** in which the first evaporator **10** is located, increasing the dehumidification, even if slightly.

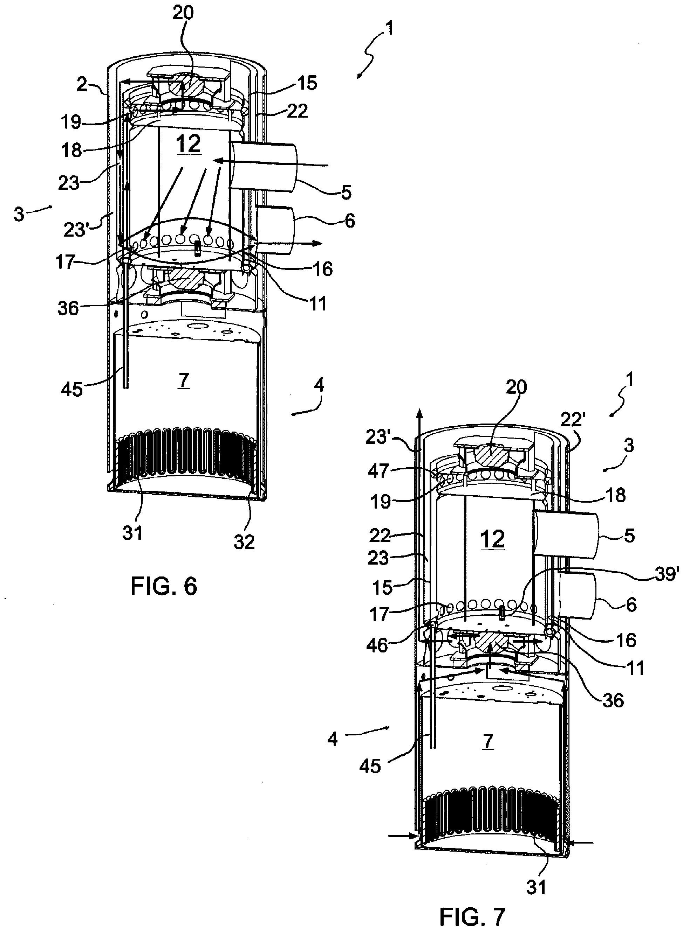

The air conditioning means also comprise a bypass condenser **21'** having a third cylindrical jacket **22** coaxial and external to the second cylindrical jacket **15** to define an outer interspace **23** placed in fluid communication with the second collection chamber **18** and, through the first interspace **16,** with the first collection chamber **12,** so that the air passing through the outer interspace **23** comes at the delivery conduit **6** and then to the cultivation environment **A,** as shown in **Fig. 6****.**

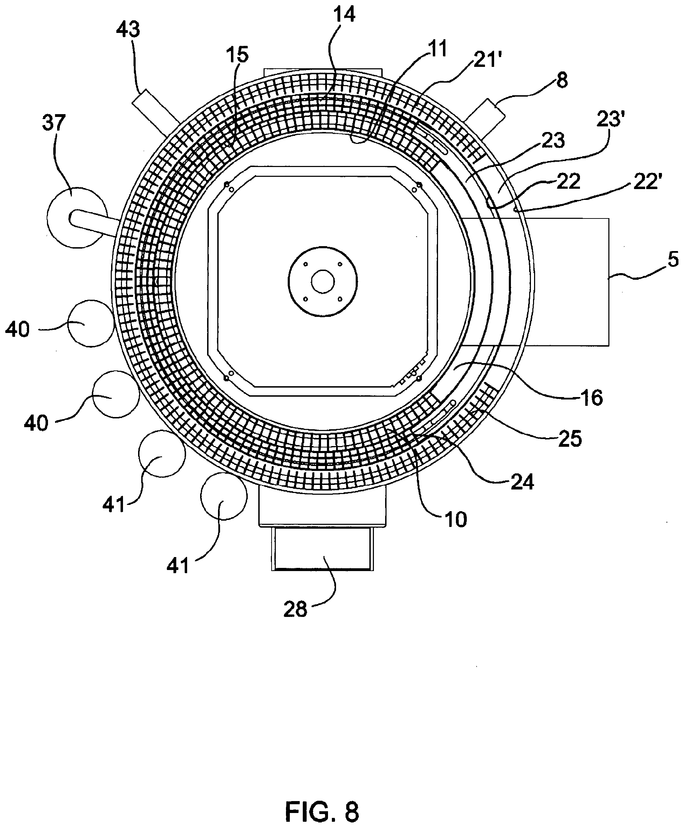

Advantageously, as more clearly visible from **Fig. 8****,** the second jacket **15** and the third jacket **22** of the condensers **14, 21'** are heat exchangers having heat exchange fins, generally indicated by **24** and **25,** which extend in a substantially axial direction and with radial orientation, that is on planes passing through the central axis of the cylinder defined by the jackets and parallel to said axis.

The water treatment means located in the lower unit **4,** in turn, may comprise a second condenser **21"** which will feed a second evaporator **32** located inside the tank **7** by sending the irrigation water to it for the eventual cooling of the water.

The second condenser **21",** which is illustrated in the figures axially aligned and placed below the first upper condenser **21',** integral therewith so as to define a single piece, will be suitably powered by the same upper compressor **60** which powers the conditioning means of the air present in the upper unit **3.**

From an operational point of view, the compressor **60,** which may comprise an inverter to regulate the rotation speed and therefore the flow rate of the cooling fluid, may he connected to valve means **70,** for example electronic expansion valves driven by stepper motors, which will allow the regulation of the flow and pressure of the exchangers or the complete blocking of the flow of the cooling fluid.

Thanks to the constant and combined regulation of the speed of the compressor **60** and of the valve means **70,** it will be possible to selectively activate the parts dedicated to the treatment of air and that dedicated to cooling the irrigation water tank. Moreover, the bypass condenser **21'** may undergo to power modulation thanks to the adjustment of the opening of the two expansion valves and the speed of the compressor **60.**

As the opening of the expansion valve connected to the bypass condenser **21'** increases, with a consequent decrease in the opening of the expansion valve on the inner condenser **14,** there will be a decrease in the flow rate on the inner condenser **14** and an increase in the flow rate on the bypass condenser **21'** with a consequent increase in the power of the bypass condenser **21'** and a decrease in the power of the inner one, so as to allow the precise regulation of the temperature at the outlet of the upper air treatment unit **3,** also being adapted to operate on the dehumidifying capacity by adjusting the speed of the compressor **60.**

This modulation of the cooling gas flow rate allows the apparatus to adapt to different types of environments and cultivation.

The air and water heating means may be defined by common electrical resistances. For example, the upper treatment unit **3** may house one or more electric resistances **26** arranged in such a position to intercept the air flow and heat it.

The apparatus 1 will also comprise control means **27** which will allow the user to activate/deactivate one or more of the aforementioned dehumidification, cooling and heating means, so as to make them work simultaneously or separately.

For example, if only dehumidification is deemed necessary, only the first evaporator **10** and the first condenser **14** will be activated.

In the event that the air needs to be heated, only the heating means will be activated, for example the resistance **26,** while in the event that the air needs to be cooled, only the bypass condenser **21'** will be activated, deactivating the first condenser **14.**

The control means **27** may comprise first sensor means **39'** adapted to detect the humidity content and/or the temperature of the incoming air to automatically activate the above means present in the air conditioning unit **3.**

Suitably, the first sensor means **39'** may be inside the apparatus **1** without the need to install additional ones in the cultivation chamber **C.**

A display **28** or other data and/or command input device may be placed externally on the containment carter **2** to allow the display of the air and water parameters and possibly allow the operator to operate to activate the above means.

As regards the lower water treatment unit **4,** according to the preferred but not exclusive embodiment of the figures, the inlet and outlet flow of water from/to the cultivation environment **A** will be promoted by a first pump **29** placed inside the treatment chamber **C,** preferably in the lower part, and which will be connected to the inlet pipe **8** entering the collection tank **7.**

Inside the latter, there is also a second pump **30** which sends the treated fluid into the delivery pipe **9** for its return to the treatment chamber **C,** preferably at the highest shelf, so as to irrigate by drop the shelves below.

The water conditioning means will comprise one or more electrical resistances **31** placed inside the collection tank **7** to heat the withdrawal water.

In the illustrated embodiment, preferred but not exclusive, there is a coil resistance **31** which extends on the internal lateral surface of the collection tank **7** to come into contact with the water.

The lower water treatment unit **4** also comprises air pumping means inside the collection tank, for example an air pump **33** which will be inserted in any point of the apparatus **1** but which preferably may be located inside the upper air conditioning unit **3.**

The air pump **33** may have a pipe for air intake from the environment in which the apparatus **1** is located and a pipe for air intake from the cultivation and/or drying environment **A,** in addition to a supply pipe **34** inside the tank **7.**

At the outlet of the supply pipe **34** there will be a bubble diffuser **35** which will oxygenate the water inside the collection tank **7.**

By arranging the two pipes, the pump **33** will be able to draw air from the environment in which the apparatus **1** is located or from the cultivation environment **A,** which is an oxygen-rich air, so as to create a slow but continuous air exchange between that present in the treatment chamber **C** and the external one.

The slow and controlled exchange of air also prevents the creation of conditions unsuitable for cultivation inside the cultivation chamber **C,** such as an oxygen saturation that would damage the plants.

The air exchange, whose function will be for the exclusive benefit of the plants, will be limited to the minimum necessary to avoid problems for the plants themselves, without the ability to significantly influence the temperatures as they are very reduced in the air flow rate.

The upper conditioning unit **3** may also comprise means for regulating the CO2 content of the air to be sent to the cultivation environment **A.**

These CO2 regulation means may comprise a CO2 tank **37** and valve means **38** adapted to regulate the amount of CO2 to be sent inside the first collection chamber **12** or elsewhere in the upper unit **3.**

The CO2 tank will preferably be located outside the containment carter **2** and will be suitably replaceable or rechargeable.

Suitable second sensor means **39,** for example comprising a probe, will allow to check the water temperature inside the collection tank **7** for the automatic or controlled activation of the water cooling or heating means.

The same second sensor means **39** will be adapted to verify the values of pH and of the electrical conductivity EC.

The dosing means will comprise one or more reservoirs **40** of manuring and/or fertilizers and/or nutrients substances placed outside the containment carter **2** in a replaceable or refillable manner.

The means for regulating the chemical and/or physical parameters of the water will comprise additional reservoirs **41** for pH correcting liquids and/or for the introduction of fertilizers in order to modify the electrical conductivity EC, which are also placed outside the containment casing 2 in a replaceable or rechargeable way.

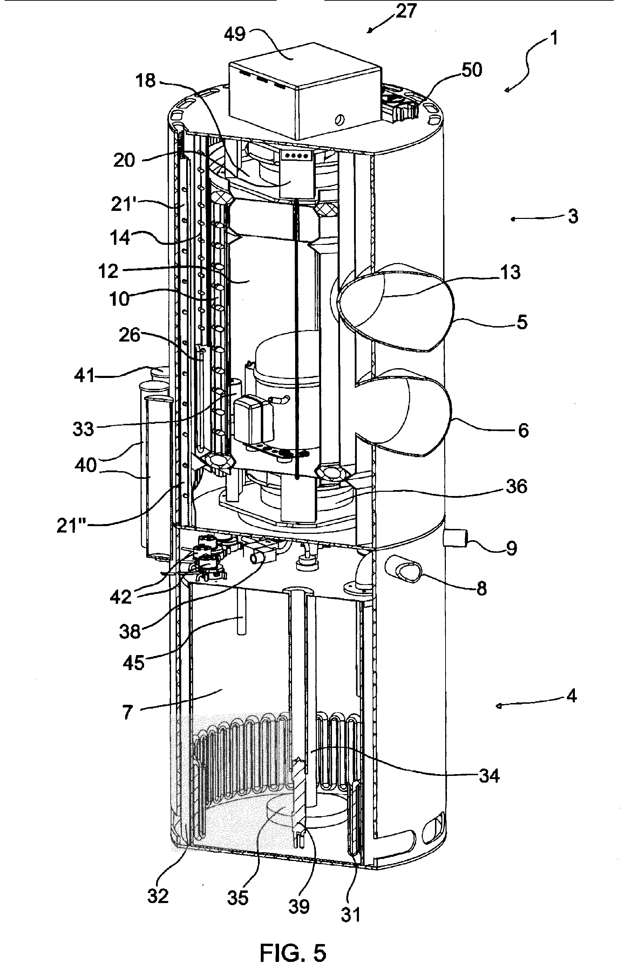

The reservoirs **40, 41** will be associated with respective peristaltic pumps **42,** visible in **Fig. 5****,** or with another pumping means which may be operated following a command given by the user by the control means **27** or automatically following detection by the second sensor means **39** of an incorrect level of the relative chemical or physical parameter of the water.

An additional level sensor, not shown in the figures, will be set up inside the collection tank **7** to check that the water level inside it is always correct.

A further connection pipe **43** equipped with a respective valve **44** may connect the collection tank **7** with the water network or with another external water supply system, if the water level in the tank **7** is too low or if it is necessary to vary the properties of the water inside it.

Further water supply inside the tank **7** may be obtained by means of a conduit **45** for collecting the condensed water that is produced in the upper conditioning unit **3** upon the cooling of the air.

Said conduit **45** will have an outlet placed inside the tank **7** or in any case in fluid communication with it and may also be used to allow the flow of CO2 inside the upper conditioning unit **3,** since its diameter will be suitably dimensioned to allow both the downward flow of condensed water and the rising flow of CO2.

Advantageously, the condensate water collection conduit **45** will comprise an annular rubber portion **46** arranged below the first collection chamber **12,** at the lower edges of the first and second jackets **11, 15.**

A second rubber ring **47** placed opposite the first at the upper edges of the two jackets **11, 15** will allow to absorb vibrations and isolate the external part of the apparatus **1** from the internal part where the aspirators **20, 36** are located.

Inside the tank **7,** a UV lamp **48** with a germicidal effect or other means for sanitizing the water may be placed, in order to eliminate germs, bacteria, viruses and other pathogens from the water.

All the control and power electronics required to power the various means and their controlled activation following the detection of the parameters by the first and second sensor means may be contained within a protective casing **49** located on the containment casing **2,** externally thereto.

The control electronics may also comprise one or more power sockets **50** for one or more lamps, preferably of the LED type, to be placed inside the cultivation environment A and which can be switched on and off in a programmable manner by means of the same electronics.

From an operational point of view, the apparatus **1** may operate in different ways, depending on whether you want to perform only an air dehumidification or only the cooling thereof or both treatments.

For example, a first function may be that of managing the temperature and humidity of the air inside the cultivation chamber **C.**

In this case, the air coming from the chamber **C** will be sucked into the first collection chamber **12** through the opening **13.** From here, through the first peripheral passages **17** it will enter the first interspace **16** and then, through the second peripheral passages **19,** in the second collection chamber **18.**

Subsequently, the first aspirator **20** will take the air from the second chamber **18** to push it into the interspace **23** and from there then exit through the delivery conduit **6,** so as to return it to the cultivation chamber **C.**

If, on the other hand, you want to cool and/or dehumidify the air, you will force the passage of air through the first evaporator **10** and then through the condenser **14,** both defined by finned exchangers, with the evaporator **10** which will cool the air and the condenser **14** which instead heats it.

If you only want to dehumidify, the power of the evaporator **10** and of the condenser **14** will be substantially the same, even if in reality the condenser **14** will have slightly less power, since the air passing through the first collection chamber **12** is heated by the compressor **60** and by other components that generate heat which are located inside the same first chamber **12.**

Therefore, the air will first be cooled by the first evaporator **10,** thus forming condensate, with contextual dehumidification, and then the air will pass through the first condenser **14** which, by heating the air, brings it back to the temperature it had before entering the first chamber **12,** obtaining only dehumidification since the air enters and exits the apparatus at the same temperature but with a lower relative humidity.

If only cooling is desired, the first condenser **14** will be turned off, that is no cooling fluid will be sent to the inside by the compressor **60,** by closing the electronic expansion valve **70** positioned downstream of the first condenser **14.**

In order to feed the first evaporator **10** to cool the air, however, the expansion valve **70** located downstream of the condenser **21'** will open, also obtaining dehumidification, since the air, cooling, gives off water and creates condensation.

However, it is understood that it will not be possible cooling without dehumidifying since, for physical reasons, when the air is cooled it will always give off water and therefore the relative humidity will always drop.

However, this condition is not a problem because the large production of water vapor generated by the transpiration of plants will always require more power than is necessary to cool the air.

In addition, a further advantage will be the fact that the apparatus **1** will be able to recover the water transpired by the plants, with consequent saving of water and a low refilling frequency of the tank **7.**

Moreover, according to a not shown variant, when you needs to cool down but there is a risk of dropping the humidity to critical levels, it will be possible to divert the flow of condensed water, which instead of going to the irrigation water tank **7** will move to a special humidifier in communication with one of the interspaces wherein the air from chamber **C** circulates and which will then return the absorbed vapor.

The variability of the speed of the compressor **60** will have the purpose of making dehumidification more or less effective.

As matter of fact, the most probable operating condition is that in which both cooling and dehumidifying are needed simultaneously, even if not always at maximum power. Therefore, if it is desired to maintain constant values of temperature and humidity inside the cultivation chamber **C,** without sudden changes of these two parameters, you have necessary to operate both on the rotation speed of the compressor **60** and on the opening/closing of the electronic expansion valves **70,** with the rotation speed of the compressor **60** which will vary the flow of the cooling fluid in the condensor(s), modifying the cooling and dehumidifying effectiveness of the evaporator **10,** and with the electronic expansion valves **70** which will allow to modulate the flow rate and therefore the power between the two condensers **14** and **21'.**

By adjusting the electronic valves located downstream of the two condensers **14, 21'** it will be possible to adjust the flow of cooling fluid between the first condenser **14** and the condenser **21'** so as to finely control the outlet temperature of the air from the machine that is directed in the cultivation chamber **C** on the basis of the real needs and of the temperature and humidity values to be reached in the cultivation chamber **C.** Thanks to this particular operating logic and to the fine regulation of the outlet temperature, it allows to have temperature and humidity constant during time, unlike the known condensers with an on/off operating logic, which work in a predetermined temperature range and that are unable to keep this temperature constant over time, which instead fluctuates continuously between a maximum and a minimum value. The presence of the second aspirator **36** will then allow to dissipate the heat produced by the bypass condenser **21'** by drawing air from the environment in which the apparatus is located and sending it to the bypass condenser **21'.**

In particular, the air sucked in by the second aspirator **36** enters from the lower part of the casing **2** equipped with slots that surround the lower part, and then is pushed into the external interspace **23',** also dissipating the heat produced by the second condenser **21"** connected with the second evaporator **32** located in the irrigation water tank **7,** both of which being located in the same interspace.

Regarding the water temperature regulation function, if it is necessary to cool it, the second condenser **21"** will be activated to start the second evaporator **32** located inside the irrigation water tank **7,** with the expansion valve **70** which will have the sole function of correctly operating the evaporator **32,** by keeping stable the temperature and the pressure of the cooling fluid inside the evaporator **32,** while the cooling power of this latter will be adjusted only through the speed of the compressor **60.**

## Claims

1. An apparatus for the automation of hydroponic cultivation and/or the drying of plants, wherein the apparatus is adapted to be connected to an environment **(A)** for the positioning of plants and the hydroponic cultivation and/or the drying thereof having a cultivation chamber **(C),** while remaining outside the environment, which apparatus comprises a containment casing **(2)** which contains at its inside:
- an upper air conditioning unit **(3)** having a conduit **(5)** for withdrawal of the air to be conditioned and a delivery conduit **(6)** for the conditioned air, said conduits **(5, 6)** being associated with means **(20)** for the air recirculation and being adapted to be placed in fluid communication with the cultivation chamber **(C)** to define, in use, a closed cycle;
- a lower water treatment unit **(4)** provided with water pumping means **(30)** having a collection tank **(7)** of the water to be treated with an inlet pipe **(8)** of the water coming from the cultivation and/or drying external environment **(A)** and a delivery pipe **(9)** of the treated water to the cultivation and/or drying external environment **(A);**
wherein said upper air conditioning unit **(3)** comprises air conditioning means **(10, 14)** for cooling and dehumidifying the air and air heating means **(26)** adapted to be operated in a combined and/or selective manner to vary the temperature and/or humidity parameters of the air to be sent to the external environment **(A);**
wherein said lower water treatment unit **(4)** comprises water conditioning means **(31, 32)** for conditioning the water collected in said tank **(7),** dosing means **(40, 42)** of manuring and/or fertilizers and/or nutrients substances in said tank **(7),** means **(40, 42)** for regulating the chemical and/or physical parameters of the water collected in said tank (7);
**characterized in that** said air conditioning means comprise a first evaporator **(10)** having a first cylindrical jacket **(11)** closed at the ends to define a first collection chamber **(12)** of the air to be conditioned provided with an opening **(13)** for the connection of said withdrawal conduit **(5).**

2. Apparatus as claimed in claim 1, **characterized in that** said air conditioning means comprise a first condenser **(14)** having a second cylindrical jacket **(15)** coaxial and external to said first cylindrical jacket **(11)** to define an inner interspace **(16).**

3. Apparatus as claimed in claim 2, **characterized in that** said first jacket **(11)** has one or more first peripheral passages **(17)** for the flow of air from said first collection chamber **(12)** to said inner interspace **(16).**

4. Apparatus as claimed in claim 3, **characterized in that** said first cylindrical jacket **(11)** encloses a second air collection chamber **(18)** located above said first chamber **(12)** and in fluidic connection with the same through said inner interspace **(16).**

5. Apparatus as claimed in claim 4, **characterized in that** said recirculation means comprise a first aspirator **(20)** housed above said second collection chamber **(18).**

6. Apparatus as claimed in any preceding claim, **characterized in that** said heating means comprise one or more electric resistances **(26).**

7. Apparatus as claimed in any preceding claim, **characterized in that** said water conditioning means comprise one or more electrical resistances **(31)** and a second evaporator **(32)** associated with said collection tank **(7)** for regulating the temperature of the water collected thereinto.

8. Apparatus as claimed in claim 7, **characterized in that** said water conditioning means comprise a second condenser **(21")** connected to said second evaporator **(32)** to cool the water present in said tank **(7).**

9. Apparatus as claimed in claim 8, **characterized in that** said conditioning means comprise a compressor **(60)** for a refrigerant fluid adapted to power said condensers **(14, 21', 21").**

10. Apparatus as claimed in claim 9, **characterized in that** said conditioning means comprise a bypass condenser **(21')** provided with valve means **(70)** for regulating and partializing the flow of said cooling fluid between said first condenser **(14)** and said second condenser **(21').**

11. Apparatus as claimed in claim 10, **characterized in that** said second collection chamber **(18)** has one or more second peripheral passages **(19)** for the flow of air from said inner interspace (16) to an outer interspace **(23)**

12. Apparatus as claimed in claim 11, **characterized in that** said condensers **(14, 21', 21")** are heat exchangers having heat exchange fins **(24, 25)** which extend in a substantially axial direction and with a radial orientation.

13. Apparatus as claimed in any preceding claim, **characterized in that** said lower water treatment unit **(4)** comprises air pumping means **(33)** in said collection tank **(7)** having an air intake pipe from the environment in which the apparatus is located, a pipe for taking the air from the cultivation and/or drying environment **(A)** and a supply pipe **(34)** for the air in said tank **(7)** provided with a bubble diffuser **(35)** at the outlet.

14. Apparatus as claimed in claim 13, **characterized by** comprising means for regulating the CO2 content of the water having a CO2 reservoir **(37)** and valve means **(38)** adapted to regulate the amount of CO2 to be sent to the cultivation chamber **(C).**

15. Apparatus as claimed in any preceding claim, **characterized in that** said dosing means comprise one or more reservoirs **(40)** of manuring and/or fertilizing and/or nutrient substances located outside said containment casing **(2)** in a replaceable or refillable manner, said means for regulating the chemical and/or physical parameters of the water comprising respective one or more reservoir **(41)** for pH correcting liquids and/or for liquids for regulating the electrical conductivity.

## Patentansprüche

1. Vorrichtung für die Automatisierung der Hydroponischen Kultivierung und/oder Trocknung Von Pflanzen, wobei die Vorrichtung angepasst ist, mit einer Umgebung **(A)** zur Positionierung von Pflanzen und der hydroponischen Kultivierung und/oder deren Trocknung mit einer Kultivierung verbunden zu werden Kammer **(C),** während sie außerhalb der Umgebung bleibt, wobei die Vorrichtung ein Sicherheitsgehäuse **(2)** umfasst, das in seinem Inneren enthält:
- eine obere Klimatisierungseinheit **(3)** mit einer Abzugsleitung **(5)** zum Abziehen der zu klimatisierenden Luft und einer Zufuhrleitung **(6)** für die klimatisierte Luft, wobei die Leitungen **(5, 6)** mit Rezirkulationsmitteln **(20)** für verbunden sind wobei die Luftumwälzung angepasst ist, um in Fluidverbindung mit der Kultivierungskammer **(C)** angeordnet zu werden, um im Gebrauch einen geschlossenen Kreislauf zu definieren;
- eine untere Wasserbehandlungseinheit **(4),** die mit Wasserpumpmitteln **(30)** versehen ist, die einen Sammeltank **(7)** für das zu behandelnde Wasser mit einem Einlassrohr **(8)** für das Wasser hat, das aus der externen Kultivierungs- und/oder Trocknungsumgebung stammt **(A)** und ein Zuleitungsrohr **(9)** des behandelten Wassers zu der externen Kultivierungs- und/oder Trocknungsumgebung **(A);**
wobei die obere Klimatisierungseinheit **(3)** eine Klimatisierungseinrichtung **(10, 14)** zum Kühlen und Entfeuchten der Luft und eine Luftheizmittel **(26)** umfasst, die geeignet ist, in einer kombinierten und/oder selektiven Weise betrieben zu werden, um die Temperatur zu variieren und/oder Feuchtigkeitsparameter der an die Außenumgebung **(A)** zu sendenden Luft;
wobei die untere Wasseraufbereitungseinheit **(4)** Wasserautbereitungsmittel **(31, 32)** zum Aufbereiten des in dem Sammeltank **(7)** gesammelten Wassers, Dosiermittel **(40, 42)** für Dünger und/oder Düngemittel und/oder Nährstoffsubstanzen in dem Sammeltank **(7)** umfasst Behälter, Mittel **(40, 42)** zum Regulieren der chemischen und/oder physikalischen Parameter des in dem Sammeltank **(7)** gesammelten Wassers; **dadurch gekennzeichnet, dass** die Klimatisierungsmittel einen ersten Verdampfer **(10)** mit einem ersten zylindrischen Mantel **(11)** umfassen, der an den Enden geschlossen ist, um eine erste Sammelkammer **(12)** der zu klimatisierenden Luft zu definieren, die mit einer Öffnung **(13)** für die Verbindung der Abzugsleitung **(5)** versehen ist.

2. Vorrichtung nach Anspruch 1, **dadurch gekennzeichnet, dass** die Klimatisierungseinrichtung einen ersten Kondensator **(14)** mit einem zweiten zylindrischen Mantel **(15)** koaxial und außerhalb des ersten zylindrischen Mantels **(11)** aufweist, um einen inneren Zwischenraum **(16)** zu definieren.

3. Vorrichtung nach Anspruch 2, **dadurch gekennzeichnet, dass** der erste Mantel **(11)** einen oder mehrere erste periphere Durchgänge **(17)** für den Luftstrom von der ersten Sammelkammer **(12)** zum inneren Zwischenraum **(16)** aufweist.

4. Vorrichtung nach Anspruch 3, **dadurch gekennzeichnet, dass** der erste zylindrische Mantel **(11)** eine zweite Luftsammelkammer **(18)** umschließt, die über der ersten Sammelkammer **(12)** angeordnet ist und mit derselben durch den inneren Zwischenraum **(16)** in Fluidverbindung steht.

5. Vorrichtung nach Anspruch 4, **dadurch gekennzeichnet, dass** die Rezirkulationsmittel einen ersten Aspirator **(20)** umfassen, der über der zweiten Sammelkammer **(18)** untergebracht ist.

6. Vorrichtung nach einem der vorhergehenden Ansprüche, **dadurch gekennzeichnet, dass** die Luftheizmittel einen oder mehrere elektrische Widerstände **(26)** umfassen.

7. Vorrichtung nach einem der vorhergehenden Ansprüche, **dadurch gekennzeichnet, dass** die Wasseraufbereitungsmittel einen oder mehrere elektrische Widerstände **(31)** und einen zweiten Verdampfer **(32)** umfassen, der dem Sammeltank **(7)** zugeordnet ist, um die Temperatur des darin gesammelten Wassers zu regulieren.

8. Vorrichtung nach Anspruch 7, **dadurch gekennzeichnet, dass** die Wasseraufbereitungsmittel einen zweiten Kondensator **(21")** umfassen, der mit dem zweiten Verdampfer **(32)** verbunden ist, um das in dem Sammeltank **(7)** vorhandene Wasser zu kühlen.

9. Vorrichtung nach Anspruch 8, **dadurch gekennzeichnet, dass** die Konditionierungsmittel einen Kompressor **(60)** für ein Kühlfluid umfassen, der angepasst ist, um die Kondensatoren **(14, 21', 21")** anzutreiben.

10. Vorrichtung nach Anspruch 9, **dadurch gekennzeichnet, dass** die Konditionierungsmittel einen Bypass-Kondensator **(21')** umfassen, der mit Ventilmitteln **(70)** zum Regulieren und Teilen der Strömung des Kühlfluids zwischen dem ersten Kondensator (14) und dem zweiten versehen ist Kondensator **(21').**

11. Vorrichtung nach Anspruch 10, **dadurch gekennzeichnet, dass** die zweite Sammelkammer **(18)** einen oder mehrere zweite periphere Durchgänge **(19)** für den Luftstrom von dem inneren Zwischenraum **(16)** zu einem äußeren Zwischenraum **(23)** aufweist.

12. Vorrichtung nach Anspruch 11, **dadurch gekennzeichnet, dass** die Kondensatoren **(14, 21', 21")** Wärmetauscher sind, die Wärmetauscherrippen **(24, 25)** aufweisen, die sich in einer im Wesentlichen axialen Richtung und mit einer radialen Ausrichtung erstrecken.

13. Vorrichtung nach einem der vorhergehenden Ansprüche, **dadurch gekennzeichnet, dass** die untere Wasserbehandlungseinheit **(4)** eine Luftpumpeinrichtung **(33)** in dem Sammeltank **(7)** mit einem Lufteinlassrohr aus der Umgebung, in der sich die Vorrichtung befindet, umfasst, ein Rohr zum Entnehmen der Luft aus der Kultivierungs- und/oder Trocknungsumgebung **(A)** und ein Zufuhrrohr **(34)** für die Luft in dem Sammeltank **(7),** das mit einem Blasendiffusor **(35)** am Auslass versehen ist.

14. Vorrichtung nach Anspruch 13, **dadurch gekennzeichnet, dass** sie eine Einrichtung zum Regulieren des CO2-Gehalts des Wassers mit einem CO2-Reservoir **(37)** und einer Ventileinrichtung **(38)** umfasst, die angepasst ist, um die CO2-Menge zu regulieren, die der Kultivierungskammer **(C)** zugeführt werden soll.

15. Vorrichtung nach einem der vorhergehenden Ansprüche, **dadurch gekennzeichnet, dass** die Dosiermittel einen oder mehrere Vorratsbehälter **(40)** für Dünge- und/oder Düngemittel- und/oder Nährstoffsubstanzen umfassen, die außerhalb des Sicherheitsgehäuses **(2)** austauschbar oder nachfüllbar angeordnet sind, wobei die Mittel zum Regulieren der chemischen und/oder physikalischen Parameter des Wassers jeweils einen oder mehrere Vorratsbehälter **(41)** für pH-Korrekturflüssigkeiten und/oder für Flüssigkeiten zum Regulieren der elektrischen Leitfähigkeit umfassen.

## Revendications

1. Appareil pour l'automatisation de la culture hydroponique et/ou du séchage des plantes, dans lequel l'appareil est adapté pour être connecté à un environnement **(A)** pour le positionnement de plantes et la culture hydroponique et/ou le séchage de celles-ci ayant une chambre de culture **(C),** tout en restant à l'extérieur de l'environnement, lequel appareil comprend une enveloppe de confinement **(2)** qui contient à l'intérieur:
- un unité supérieur de conditionnement d'air **(3)** comportant une conduite **(5)** de prélèvement de l'air à conditionner et une conduite **(6)** de refoulement de l'air conditionné, lesdites conduites **(5, 6)** étant associées à des moyens de recirculation **(20)** de l'air et étant adapté pour être mis en communication fluidique avec la chambre de culture **(C)** pour définir, en utilisation, un cycle fermé;
- une unité inférieure de traitement d'eau **(4)** munie de moyens de pompage d'eau **(30)** comportant un réservoir de collecte **(7)** de l'eau à traiter avec une conduite d'arrivée **(8)** de l'eau provenant du milieu extérieur de culture et/ou de séchage **(A)** et une canalisation **(9)** d'amenée de l'eau traitée vers le milieu extérieur de culture et/ou de séchage **(A);**
dans lequel ladite unité supérieure de conditionnement d'air **(3)** comprend des moyens de conditionnement d'air **(10, 14)** pour refroidir et déshumidifier l'air et des moyens de chauffage d'air **(26)** adaptés pour fonctionner de manière combinée et/ou sélective pour faire varier la température et/ou paramètres d'humidité de l'air à envoyer vers l'environnement extérieur **(A)** ;
dans lequel ladite unité inférieure de traitement d'eau **(4)** comprend des moyens de conditionnement d'eau **(31, 32)** pour conditionner l'eau collectée dans ledit réservoir **(7),** des moyens de dosage **(40, 42)** de fumier et/ou d'engrais et/ou de substances nutritives dans ledit réservoir **(7),** des moyens **(40, 42)** de régulation des paramètres chimiques et/ou physiques de l'eau recueillie dans ledit réservoir **(7);**
**caractérisé en ce que** lesdits moyens de conditionnement d'air comprennent un premier évaporateur **(10)** ayant une première chemise cylindrique **(11)** fermée aux extrémités pour définir une première chambre de collecte **(12)** de l'air à conditionner munie d'une ouverture **(13)** pour le raccordement dudit conduit de de prélèvement (5).

2. Appareil selon la revendication 1, **caractérisé en ce que** lesdits moyens de conditionnement d'air comprennent un premier condenseur **(14)** ayant une deuxième chemise cylindrique **(15)** coaxiale et externe à ladite première chemise cylindrique **(11)** pour définir un espace intérieur **(16).**

3. Appareil selon la revendication 2, **caractérisé en ce que** ladite première chemise **(11)** a un ou plusieurs premiers passages périphériques **(17)** pour le flux d'air de ladite première chambre de collecte **(12)** vers ledit espace intérieur **(16).**

4. Appareil selon la revendication 3, **caractérisé en ce que** ladite première chemise cylindrique **(11)** renferme une deuxième chambre de collecte **(18)** d'air située au-dessus de ladite première chambre **(12)** et en connexion fluidique avec celle-ci à travers ledit espace intérieur **(16).**

5. Appareil selon la revendication 4, **caractérisé en ce que** lesdits moyens de recirculation comprennent un premier aspirateur **(20)** logé au-dessus de ladite deuxième chambre de collecte **(18).**

6. Appareil selon l'une quelconque des revendications précédentes, **caractérisé en ce que** lesdits moyens de chauffage comprennent une ou plusieurs résistances électriques **(26).**

7. Appareil selon l'une quelconque des revendications précédentes, **caractérisé en ce que** lesdits moyens de conditionnement d'eau comprennent une ou plusieurs résistances électriques **(31)** et un second évaporateur **(32)** associé audit réservoir de collecte **(7)** pour réguler la température de l'eau collectée dans celui-ci.

8. Appareil selon la revendication 7, **caractérisé en ce que** lesdits moyens de conditionnement d'eau comprennent un second condenseur **(21")** relié audit second évaporateur **(32)** pour refroidir l'eau présente dans ledit réservoir **(7).**

9. Appareil selon la revendication 8, **caractérisé en ce que** lesdits moyens de conditionnement comprennent un compresseur **(60)** d'un fluide réfrigérant adapté pour alimenter lesdits condenseurs **(14, 21', 21").**

10. Appareil selon la revendication 9, **caractérisé en ce que** lesdits moyens de conditionnement comprennent un condenseur de dérivation **(21')** muni de moyens de soupape **(70)** pour réguler et diviser le débit dudit fluide de refroidissement entre ledit premier condenseur **(14)** et ledit second condenseur **(21').**

11. Appareil selon la revendication 10, **caractérisé en ce que** ladite seconde chambre de collecte **(18)** comporte un ou plusieurs seconds passages périphériques **(19)** pour l'écoulement d'air dudit espace intérieur **(16)** vers un espace extérieur **(23).**

12. Appareil selon la revendication 11, **caractérisé en ce que** lesdits condenseurs **(14, 21', 21")** sont des échangeurs de chaleur ayant des ailettes d'échange de chaleur **(24, 25)** qui s'étendent dans une direction sensiblement axiale et avec une orientation radiale.

13. Appareil selon l'une quelconque des revendications précédentes, **caractérisé en ce que** ladite unité inférieure de traitement d'eau **(4)** comprend des moyens de pompage d'air **(33)** dans ledit réservoir de collecte **(7)** ayant un tuyau d'admission d'air de l'environnement dans lequel l'appareil est situé, une conduite de prélèvement d'air de l'environnement **(A)** de culture et/ou de séchage et une conduite d'amenée **(34)** de l'air dans ladite réservoir **(7)** munie d'un diffuseur de bulles **(35)** en sortie.

14. Appareil selon la revendication 13, **caractérisé en ce qu'**il comprend des moyens pour réguler la teneur en CO2 de l'eau ayant un réservoir de CO2 **(37)** et des moyens de vanne **(38)** adaptés pour réguler la quantité de CO2 à envoyer à la chambre de culture **(C).**

15. Appareil selon l'une quelconque des revendications précédentes, **caractérisé en ce que** lesdits moyens de dosage comprennent un ou plusieurs réservoirs **(40)** de matières fertilisantes et/ou engrais et/ou de matières nutritives situés à l'extérieur de ladite enveloppe de confinement **(2)** de manière remplaçable ou rechargeable, lesdits moyens de régulation des paramètres chimiques et/ou physiques de l'eau comprenant respectivement un ou plusieurs réservoirs **(41)** pour des liquides de correction de pH et/ou pour des liquides de régulation de la conductivité électrique.
